# EUROPEAN PATENT APPLICATION

(11) **EP 4 670 588 A1**
(43) Date of publication of application: **31.12.2025**
(21) Application number: 24759858.4
(22) Date of filing: 20.02.2024
(51) Int. Cl.: A47J 37/12

(54) **OIL FILTERING ASSEMBLY AND COOKING APPLIANCE**

(30) Priority: 21.02.2023 CN 202320362996 U
(71) Applicant: Zhejiang Shaoxing Supor Domestic Electrical Appliance Co., Ltd., Shaoxing, Zhejiang 312000 (CN)
(72) Inventor: LIU, Jianwu, Shaoxing, Zhejiang 312000 (CN); LU, Yongzhu, Shaoxing, Zhejiang 312000 (CN)
(74) Representative: LLR
(86) International application number: PCT/IB2024/051594
(87) International publication number: WO 2024/176098

(57) **Abstract**

An oil filtering assembly and a cooking appliance. The oil filtering assembly comprises an oil filter (20) and a filtering member (10) removably placed above the oil filter (20), the filtering member (10) comprising a first oil filtering screen (11) and a handle (12) attached to the first oil filtering screen (11), the oil filter (20) comprising a second oil filtering screen (21), wherein the first oil filtering screen (11) is capable of being disposed to cover the second oil filtering screen (21) from above to form a two-stage oil filtering structure. The cooking appliance comprises an inner pot (2) for containing food to be cooked, an oil collecting tray (3) removably placed under the inner pot (2), and the oil filtering assembly.

## Description

### Technical Field

The present disclosure relates to the field of cooking appliances, and in particular, to an oil filtering assembly and a cooking appliance comprising the oil filtering assembly.

### Background of the Invention

Currently, the deep fryers on the market generally adopt a single-stage oil filtering screen as their oil filtering screen structure. When the deep fryer is in operation, food residues of varying sizes are easily generated in the inner pot. Since the oil filtering screen is easily clogged by the food residues during the oil filtering process, the filtering effect becomes worse, or the oil filtering screen cannot perform filtering after it is clogged. Accordingly, such an oil filtering screen structure having only a single-stage oil filtering screen is prone to being clogged by food residues and requires frequent removal and cleaning. Moreover, since the oil filtering screen is fixedly installed on the oil filter assembly, disassembly and assembly are relatively complicated and time-consuming, and if frequent disassembly and cleaning are required, the oil filtering screen is also easily damaged.

### Summary of the Invention

In order to solve the above problems in the prior art, the present disclosure provides an oil filtering assembly designed to achieve a two-stage oil filtering structure, which can also be conveniently assembled and disassembled and is easy to clean.

According to an aspect of the present disclosure, an oil filtering assembly is provided and comprises an oil filter and a filtering member removably placed above the oil filter, the filtering member comprising a first oil filtering screen and a handle attached to the first oil filtering screen, the oil filter comprising a second oil filtering screen, wherein the first oil filtering screen is capable of being disposed to cover the second oil filtering screen from above so as to form a two-stage oil filtering structure.

As such, a two-stage oil filtering structure can be effectively realized. During use, food residues and oil first pass through the first oil filtering screen of the filtering member, thus most of the food residues are filtered out and the food residues reaching the second oil filtering screen of the oil filter can be greatly reduced. As a result, the oil filter is less prone to being clogged, significantly reducing the frequency of disassembly and cleaning, and thus improving the service life of the oil filter. In addition, since the filtering member comprising the first oil filtering screen can be conveniently placed and removed, cleaning is further facilitated.

Preferably, the first oil filtering screen may be hat-shaped, with the central portion arched relative to the periphery, and comprises an arched portion and a peripheral portion. The peripheral portion may surround the second oil filtering screen, and the arched portion may be opposite to the second oil filtering screen. As such, the hat-shaped design of the first oil filtering screen can maximize the oil filtering area, thereby ensuring that oil can pass through the first oil filtering screen from multiple directions and improving the filtering effect. In addition, the peripheral portion of the first oil filtering screen surrounds the second oil filtering screen, allowing the first oil filtering screen to fully enclose the second oil filtering screen and preventing food residues from directly contacting the second oil filtering screen without first being filtered by the first oil filtering screen.

Preferably, oil passing holes are distributed over the entire area of the arched portion. As such, the oil filtering area of the first oil filtering screen can be fully utilized, improving the oil filtering effect.

Preferably, the handle may comprise an attachment end attached to the first oil filtering screen, an intermediate portion extending from the attachment end away from the first oil filtering screen, and a hanging end bent relative to the intermediate portion. As such, by using the handle, the first oil filtering screen can be easily placed, removed, and fixed.

Preferably, the oil filter may further comprise a shell, and the second oil filtering screen may be fixedly press-fitted into the shell. As the second oil filtering screen in the oil filter is fixedly pressed-fitted into the shell, disassembly and cleaning of the second oil filtering screen are relatively cumbersome, and frequent disassembly and cleaning may accelerate its damage. In this case, by providing the first oil filtering screen that can be conveniently placed and removed, most of the food residues are filtered out by the first oil filtering screen and cleaning is mainly performed on the first oil filtering screen. As such, the frequency of cleaning and replacing the second oil filtering screen is reduced, thereby simplifying the cleaning of the entire oil filtering assembly.

Preferably, the oil filter may further comprise a sealing member disposed below the second oil filtering screen, the shell comprises a tapered section, and an outer peripheral surface of the sealing member is capable of contacting an inner wall of the shell at the tapered section to form a sealing position, thereby preventing fluid from flowing out of the oil filter; moreover, the sealing member can be actuated by an external force to move so that the outer peripheral surface of the sealing member is spaced apart from the inner wall, thereby opening a flow path that allows fluid to flow out of the oil filter. As such, the oil filter not only performs a filtering function, but also functions to open or close (or seal) the oil discharge path to allow or prevent oil from flowing out of the oil filter, that is, it serves as an oil discharge switch.

Preferably, the oil filter may further comprise a return spring, which may be disposed on the sealing member to return the sealing member to the sealing position when the sealing member is not actuated by an external force.

Preferably, the sealing member comprises a sealing head and a sealing ring sleeved on an outer surface of the sealing head, and the sealing ring is configured to contact or disengage from the inner wall of the shell. As such, the sealing position of the sealing member can be reliably achieved.

According to another aspect of the present disclosure, a cooking appliance is provided and comprises an inner pot for containing food to be cooked and an oil collecting tray removably placed under the inner pot, wherein the cooking appliance further comprises the oil filtering assembly as described above.

Preferably, when the filtering member is placed above the oil filter, the peripheral portion of the first oil filtering screen abuts against a bottom of the inner pot, and the handle hangs on an upper edge of the inner pot. As such, the filtering member is positioned by the hanging of the handle and abuts against the bottom of the inner pot, that is, the first oil filtering screen is not mechanically fixed to the bottom of the inner pot, thereby achieving flexibility in placing and removing the filtering member. In addition, since the handle hangs on the upper edge of the inner pot, when placing or removing the filtering member, the portion of the handle hanging on the upper edge of the inner pot can be grasped, preventing hands from getting dirty or burned.

Preferably, the oil filter may be disposed through the bottom of the inner pot, and at least a portion of the shell of the oil filter and the sealing member disposed within the shell may be located outside the inner pot.

Preferably, the oil collecting tray may be provided with a protrusion configured to contact a lower end of the sealing member, so that when the oil collecting tray is placed under the inner pot, the protrusion can contact the sealing member and push the sealing member to move, thereby opening the flow path that allows fluid to flow out of the oil filter.

As such, by means of the specific protrusion structure on the oil collecting tray, in combination with the state of the oil-collecting tray placed in the working position under the inner pot, the oil flow path of the oil filter can be opened when the oil collecting tray is in the working position below the inner pot, allowing the filtered oil to be discharged into the oil collecting tray.

Preferably, the oil collecting tray may be provided with a button attached to the protrusion, for example, on the front panel. The button is capable of being pressed from the outside to push the protrusion to move, and the protrusion in turn pushes the sealing member to move. As such, by pressing the button from the outside, the oil flow path of the oil filter located in the internal space of the inner pot and the oil collecting tray can be opened, thereby improving operational convenience.

### Brief Description of the Drawings

The above and/or other objectives and advantages of the present disclosure will become more apparent from the following description of embodiments in conjunction with the accompanying drawings, in which:
Figures 1 and 2 illustrate schematic perspective views of a cooking appliance (e.g., a deep fryer) according to an embodiment of the present disclosure;
Figures 3 and 4 illustrate schematic perspective views of the inner pot and the oil collecting tray of a cooking appliance (e.g., a deep fryer) according to an embodiment of the present disclosure;
Figure 5 illustrates a schematic partially exploded perspective view of an oil filtering assembly according to an embodiment of the present disclosure;
Figure 6 illustrates a schematic cross-sectional view of an oil filtering assembly according to an embodiment of the present disclosure;
Figure 7 illustrates a schematic cross-sectional view of the sealing member in a sealing position (i.e., with the oil flow path closed) of an oil filtering assembly according to an embodiment of the present disclosure; and
Figure 8 illustrates a schematic cross-sectional view of the sealing member opening the oil flow path of an oil filtering assembly according to an embodiment of the present disclosure.

### Introduction of reference signs:

1 - housing; 2 - inner pot; 3 - oil collecting tray; 4 - cavity; 5 - base; 10 - filtering member; 11 - first oil filtering screen; 12 - handle; 112 - arched portion; 113 - peripheral portion; 121 - intermediate portion; 122 - hanging end; 123 - attachment end; 20 - oil filter; 21 - second oil filtering screen; 22 - return spring; 23 - sealing head; 24 - sealing ring; 25 - shell; 26 - tapered section; 27 - upper edge; 28 - recess; 29 - sealing gasket; 31 - protrusion; 32 - button; P - flow path.

### Detailed Description of the Invention

Exemplary embodiments will now be described more fully with reference to the accompanying drawings. However, it should not be construed that the embodiments of the present disclosure are limited to those set forth herein. Like reference signs in the drawings denote like or similar structures, and thus their repeated description will be omitted.

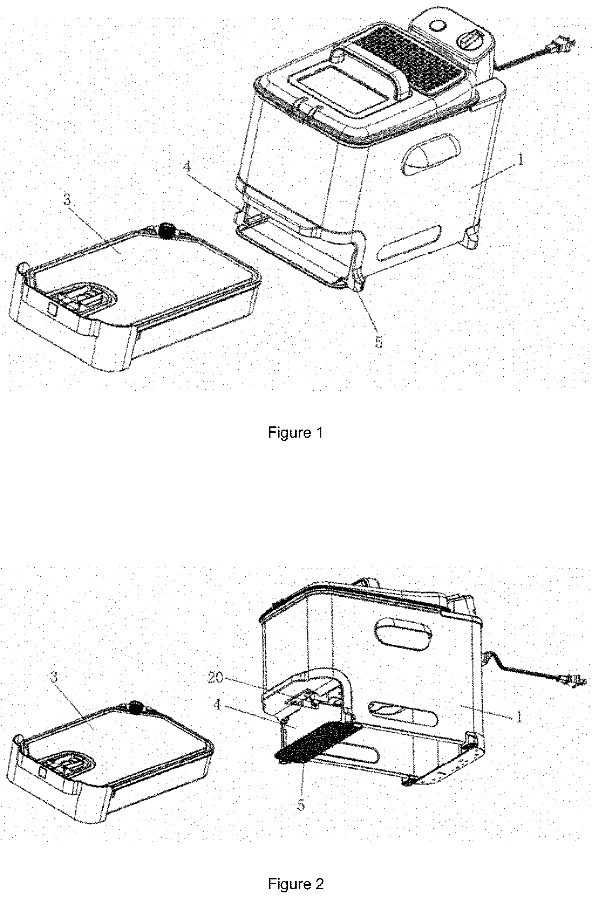

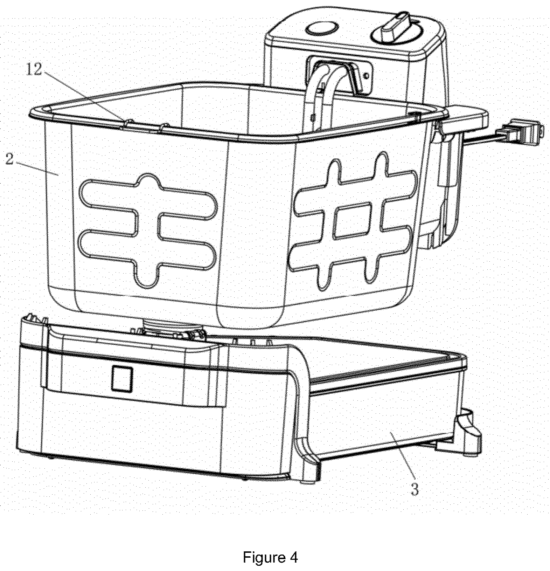

As shown in Figures 1 to 4, a cooking appliance of the present disclosure comprises a housing 1, and an inner pot 2 for containing food to be cooked can be placed in the housing 1. In addition, an oil collecting tray 3 can be placed below the inner pot 2, and can be located in a cavity 4 of the housing 1 near a base 5. According to an embodiment of the present disclosure, the cooking appliance is a deep fryer.

According to an embodiment of the present disclosure, an oil filtering assembly can be disposed on the bottom of the inner pot 2 and near the front wall of the inner pot 2.

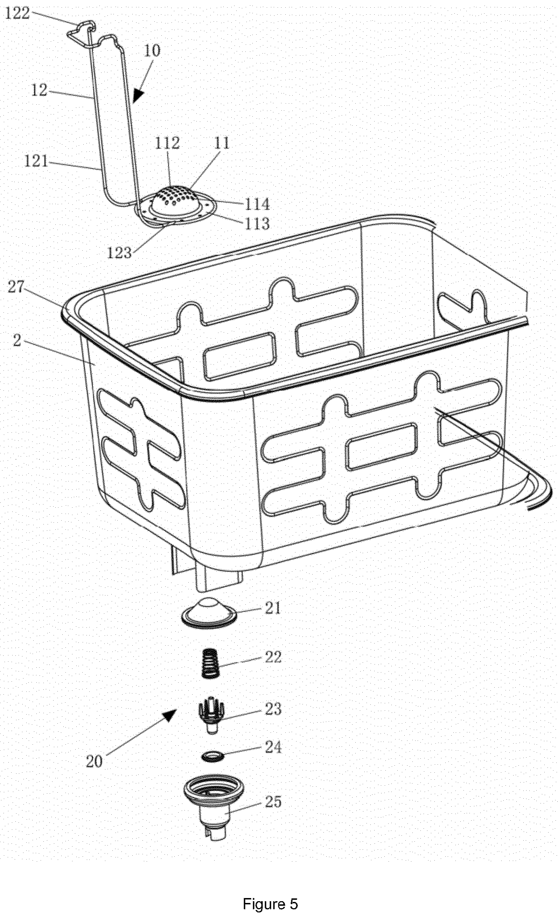

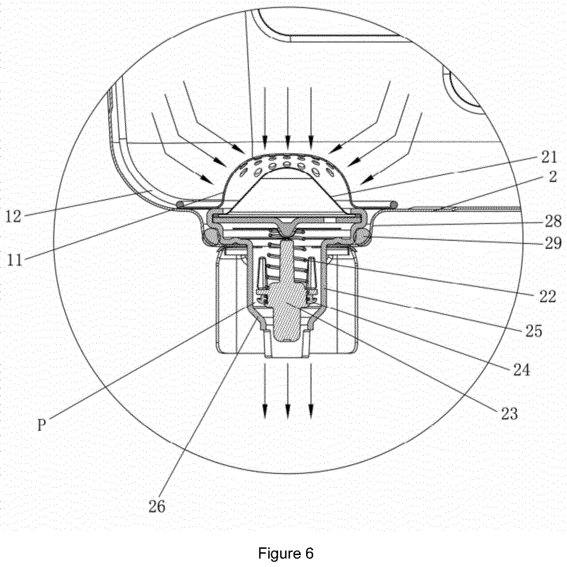

As shown in Figures 5 and 6, the oil filtering assembly may comprise an oil filter 20 disposed through the bottom of the inner pot 2. Here, the oil filter 20 may be composed of a plurality of components. On the one hand, the oil filter 20 serves a filtering function; on the other hand, it also functions to open or close (or seal) the oil discharge path to allow or prevent oil from flowing out of the oil filter 20, that is, it serves as an oil discharge switch, as will be further described in detail below.

Specifically, as shown in Figures 5 and 6, a recess 28 may be formed on the bottom of the inner pot 2 and near the front wall of the inner pot 2. The recess 28 may be recessed downward relative to the remaining portion of the bottom of the inner pot 2, so that a portion of the oil filter 20 can be placed in the recess 28.

The oil filter 20 may comprise an oil filtering screen, for example the second oil filtering screen 21 described in detail below, a sealing member disposed below the second oil filtering screen 21, a return spring 22 disposed on the sealing member, and a shell 25 accommodating these components. Preferably, the sealing member comprises a sealing head 23 and a sealing ring 24.

Here, the upper part of the sealing head 23 may be formed as a receiving portion and guiding portion for the return spring 22. The upper part may include a central rod and a forked portion disposed around the central rod. The return spring 22 may be sleeved on the central rod and positioned between the central rod and the forked portion, thereby achieving positioning and guidance of the return spring 22.

In addition, the lower part of the sealing head 23 may be formed in a cylindrical shape, and the sealing ring 24 may be sleeved on the outer surface of the sealing head 23 for contacting or disengaging from the inner wall of the shell 25.

Here, the combination of the sealing head 23 and the sealing ring 24 is merely an example of the sealing member, and the sealing member may also be implemented in other ways.

The upper end of the return spring 22 may abut against the second oil filtering screen 21, or, in the case where a support is disposed above the second oil filtering screen 21, it may abut against the support.

The upper half of the shell 25 can be accommodated in the recess 28 of the inner pot 2, while the lower half may extend outside the inner pot 2, so that at least a portion of the sealing member disposed within the shell 25 is located outside the inner pot 2. Said at least a portion may, for example, be the lower end of the sealing head 23.

A sealing gasket 29 is provided in an interference fit manner between the shell 25, particularly the upper half of the shell 25 accommodated in the recess 28, and the inner wall of the recess 28, thereby securing the entire oil filter 20 in place.

The second oil filtering screen 21 may be fixedly press-fitted into the shell 25, thereby positioning the second oil filtering screen 21.

The sealing member (i.e., the sealing head 23 and the sealing ring 24) can move under the actuation of an external force, for example, moving up and down, so that the outer surface of the sealing member selectively contacts or does not contact the inner wall of the shell 25. For example, as shown in Figure 6, the portion of the shell 25 exposed outside the inner pot 2 may include a cylindrical section and a tapered section 26. The maximum outer diameter of the outer surface of the sealing member may be smaller than the inner diameter of the cylindrical section of the shell 25, but may be larger than the inner diameter at certain positions of the tapered section 26. As such, the outer peripheral surface of the sealing member (here, the outer peripheral surface or outer peripheral edge of the sealing ring 24) can contact the inner wall of the shell 25 at the tapered section 26 to form a sealing position for preventing fluid, such as oil, from flowing out of the oil filter 20. When the maximum outer diameter of the outer peripheral surface of the sealing member is positioned at the cylindrical section, the outer peripheral surface of the sealing member does not contact the inner wall of the shell 25.

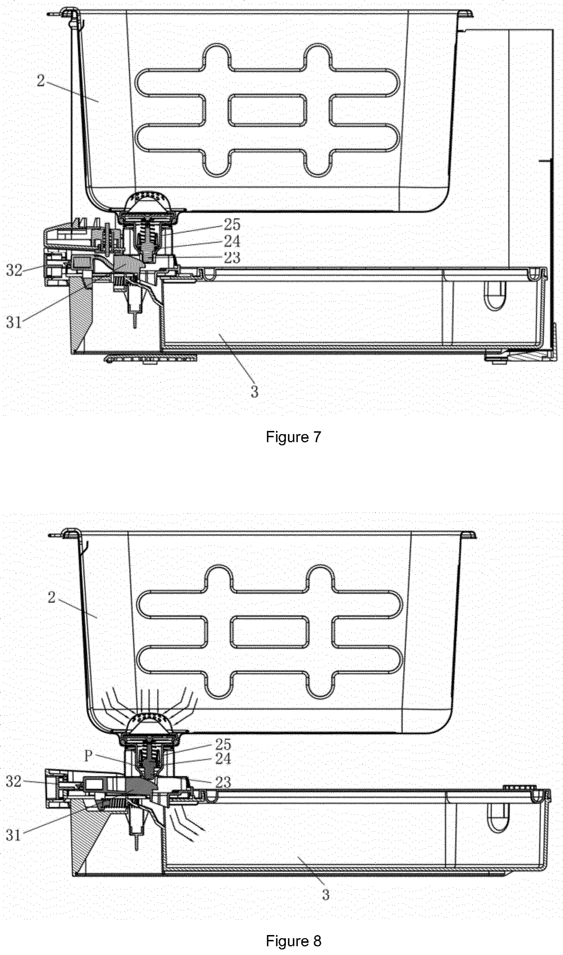

For example, Figures 6 and 8 illustrate a state where the flow path P is opened, whereas Figure 7 illustrates a state where the flow path P is closed, that is, the sealing member is in the sealing position. As shown in Figures 6 and 8, the sealing member can move under the actuation of an external force, here, moving upward, so that the outer peripheral surface of the sealing member is spaced apart from the inner wall of the shell 25, thereby opening the flow path P to allow fluid to flow out of the oil filter 20. As such, the oil in the inner pot 2 can be filtered by the oil filter 20, and the filtered oil can flow through the flow path P and be discharged into the oil collecting tray 3 located below the inner pot 2. When the sealing member is not actuated by an external force, the return spring 22 can return the sealing member to the sealing position, thereby preventing fluid from flowing out of the oil filter 20.

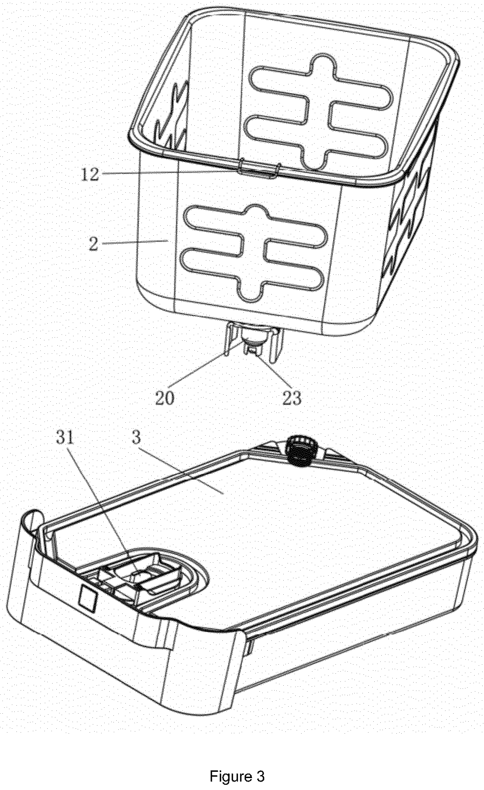

In addition, as shown in Figures 3, 7, and 8, the oil collecting tray 3, which can be placed under the inner pot 2, may be provided with a protrusion 31 for contacting the lower end of the sealing member, for example, the lower end of the sealing head 23. As such, when the oil collecting tray 3 is placed in the working position (i.e., positioned under the inner pot 2), the protrusion 31 can contact the sealing member and push the sealing member to move (here, move upward), so as to open the flow path that allows fluid to flow out of the oil filter 20, as shown in Figure 8. Therefore, through the specific protrusion structure on the oil collecting tray 3, in combination with the state of the oil collecting tray 3 being placed in the working position, the oil flow path of the oil filter 20 can be opened when the oil collecting tray 3 is located in the working position under the inner pot 2, thereby allowing the filtered oil to be discharged into the oil collecting tray 3.

The movement of the protrusion 31 and its contact with the oil filter 20 can be realized through the following structure: a button 32 attached to the protrusion 31 may be provided on the front panel of the oil collecting tray 3, which can be pressed from the outside to push the protrusion 31 to move, so that the protrusion 31 in turn pushes the sealing member to move. For example, as shown in Figure 7, the protrusion 31 may have an inclined top. When the oil collecting tray 3 is under the inner pot 2 and the button 32 is not pressed, the front end of the protrusion 31 may contact or not contact the lower end of the oil filter 20. At this time, the sealing member of the oil filter 20 remains in the sealing position as it is not actuated or sufficiently actuated by an external force. As shown in Figure 8, when the button 32 is pressed, the protrusion 31 may further move to the right, so that under the action of the inclined top, the protrusion 31 pushes the sealing member of the oil filter 20 to move upward, thereby opening the oil discharge path of the oil filter 20 and allowing the filtered oil to flow into the oil collecting tray 3. As such, by pressing the button 32 from the outside, the oil flow path of the oil filter 20 located in the internal space of the inner pot 2 and the oil collecting tray 3 can be opened, thereby improving operational convenience.

As such, the oil filter 20 integrates multiple functions including oil filtering, fixing of the oil filtering screen, and oil discharge switch. However, the oil filter 20 is fixed (for example, in an interference fit manner) in the recess 28 at the bottom of the inner pot 2, and the second oil filtering screen 21 is press-fitted into the shell 25 of the oil filter 20; therefore, under such circumstances, the process of disassembling and cleaning the oil filter 20 is relatively complicated and time-consuming. Moreover, if frequent disassembly and cleaning are required, the oil filtering screen is likely to be damaged.

Therefore, the present disclosure further proposes to provide an additional filtering member 10 above the oil filter 20.

Specifically, as shown in Figures 5 and 6, an oil filtering assembly proposed by an embodiment of the present disclosure may include the oil filter 20 and a filtering member 10 removably placed above the oil filter 20. The filtering member 10 may include a first oil filtering screen 11 and a handle 12 attached to the first oil filtering screen 11, while the oil filter 20 may include the second oil filtering screen 21 as described above. The first oil filtering screen 11 can be disposed to cover the second oil filtering screen 21 from above to form a two-stage oil filtering structure.

As such, a two-stage oil filtering structure can be effectively realized. During use, food residues and oil first pass through the first oil filtering screen 11 of the filtering member 10, thus most of the food residues are filtered out and the food residues reaching the second oil filtering screen 21 of the oil filter 20 can be greatly reduced. As a result, the oil filter 20 is less prone to being clogged, significantly reducing the frequency of disassembly and cleaning, and thus improving the service life of the oil filter 20. In addition, since the filtering member 10 comprising the first oil filtering screen 11 can be conveniently placed and removed, cleaning is further facilitated.

As shown in Figures 5 and 6, the first oil filtering screen 11 may be hat-shaped, with the central portion arched relative to the periphery, and comprises an arched portion 112 and a peripheral portion 113. When the filtering member 10 is placed above the oil filter 20, the peripheral portion 113 may surround the second oil filtering screen 21, and the arched portion 112 may be opposite to the second oil filtering screen 21. As such, the hat-shaped design of the first oil filtering screen 11 can maximize the oil filtering area, thereby ensuring that oil can pass through the first oil filtering screen 11 from multiple directions and improving the filtering effect. In addition, the peripheral portion 113 of the first oil filtering screen 11 surrounds the second oil filtering screen 21, allowing the first oil filtering screen 11 to fully enclose the second oil filtering screen 21 and preventing food residues from directly contacting the second oil filtering screen 21 without first being filtered by the first oil filtering screen 11.

The arched portion 112 may be provided with oil passing holes 114, and preferably the oil passing holes 114 are distributed over the entire area of the arched portion 112. As such, the oil filtering area of the first oil filtering screen 11 can be fully utilized, improving the oil filtering effect.

In addition, the handle 12 may comprise an attachment end 123 attached to the first oil filtering screen 11, an intermediate portion 121 extending from the attachment end 123 away from the first oil filtering screen 11, and a hanging end 122 bent relative to the intermediate portion 121. As such, by using the handle, the first oil filtering screen 11 can be easily placed, removed, and fixed.

In this case, the first oil filtering screen 11 may have an overall hat shape, and the handle 12 may have an overall elongated rod or wire shape. The handle 12 may be welded to the first oil filtering screen 11 at the attachment end 123. In addition, the hanging end 122 of the handle 12 may be formed into a shape matching the shape of the structure on which it is to hang.

In an embodiment of the present disclosure, the handle 12 may hang on the upper edge 27 of the inner pot 2.

When the filtering member 10 is placed above the oil filter 20, the peripheral portion 113 of the first oil filtering screen 11 may abut against the bottom of the inner pot 2, and the handle 12 may hang on the upper edge 27 of the inner pot 2. Preferably, the intermediate portion 121 of the handle 12 may extend close to the front wall of the inner pot 2, so that it is not affected by the food contained in the inner pot 2. Here, the intermediate portion 121 of the handle 12 can be wire-shaped, and in use, the shape of the wire-shaped handle 12 may be adjusted to adapt to the shape of the side wall of the inner pot 2.

Thus, the filtering member 10 can be positioned by the hanging of the handle 12 and abut against the bottom of the inner pot 2, that is, the first oil filtering screen 11 is not mechanically fixed to the bottom of the inner pot 2, thereby achieving flexibility in placing and removing the filtering member 10. In addition, since the handle 12 hangs on the upper edge 27 of the inner pot 2, when placing or removing the filtering member 10, the portion of the handle 12 hanging on the upper edge 27 of the inner pot 2 (i.e., the hanging end 122) can be grasped, thereby preventing hands from getting dirty or burned.

In the description of the present disclosure, it should be understood that terms indicating orientations or positional relationships, such as "central," "above," "under," "front," "rear," "left," "right," "vertical," "horizontal," "top," "bottom," "inner," and "outer" etc., are based on the orientations or positional relationships shown in the drawings, and are used merely for the convenience of describing the present disclosure and simplifying the description, and do not indicate or imply that the devices or components must have particular orientations or be constructed or operated in particular orientations. Therefore, they should not be construed as limiting the present disclosure.

The terms "first" and "second" are used merely for descriptive purposes, and should not be construed as indicating or implying relative importance or implicitly specifying the number of the indicated technical features. Thus, features designated as "first" or "second" may explicitly or implicitly include one or more of such features. In the description of the present disclosure, unless otherwise specified, the term "a plurality of" means two or more.

In the description of the present disclosure, it should be noted that, unless otherwise explicitly stated and limited, the terms "install," "connect," "couple," and "fix" should be understood in a broad sense. For example, they may refer to a fixed connection or a detachable connection or an integral connection, a mechanical connection or an electrical connection or a communication connection, a direct connection or an indirect connection via an intermediate medium, a communication of the interiors of two components or an interaction relationship between two components. Those skilled in the art can understand the specific meaning of the above terms in the context of the present disclosure according to particular circumstances.

The features, structures, or characteristics described in the present disclosure may be combined in any suitable manner in one or more embodiments. In the above description, many specific details are provided to give a thorough understanding of the embodiments of the present disclosure. However, those skilled in the art will recognize that the technical solutions of the present disclosure can be implemented without one or more of the specific details, or other methods, components, materials, etc., may be employed. In other instances, well-known structures, materials, or operations are not illustrated or described in detail in order to avoid obscuring the various aspects of the present disclosure.

## Claims

1. An oil filtering assembly, **characterized in that** it comprises an oil filter (20) and a filtering member (10) removably placed above the oil filter (20), the filtering member (10) comprising a first oil filtering screen (11) and a handle (12) attached to the first oil filtering screen (11), the oil filter (20) comprising a second oil filtering screen (21), wherein the first oil filtering screen (11) is capable of being disposed to cover the second oil filtering screen (21) from above to form a two-stage oil filtering structure.

2. The oil filtering assembly according to claim 1, **characterized in that** the first oil filtering screen (11) is hat-shaped with a central portion arched relative to a periphery and comprises an arched portion (112) and a peripheral portion (113), wherein the peripheral portion (113) surrounds the second oil filtering screen (21), and the arched portion (112) is opposite to the second oil filtering screen (21).

3. The oil filtering assembly according to claim 2, **characterized in that** oil passing holes (114) are distributed over the entire area of the arched portion (112).

4. The oil filtering assembly according to any one of claims 1 to 3, **characterized in that** the handle (12) comprises an attachment end (123) attached to the first oil filtering screen (11), an intermediate portion (121) extending away from the first oil filtering screen (11) from the attachment end (123), and a hanging end (122) bent relative to the intermediate portion (121).

5. The oil filtering assembly according to any one of claims 1 to 4, **characterized in that** the oil filter (20) further comprises a shell (25), and the second oil filtering screen (21) is fixedly press-fitted into the shell (25).

6. The oil filtering assembly according to claim 5, **characterized in that** the oil filter (20) further comprises a sealing member disposed below the second oil filtering screen (21), the shell (25) comprises a tapered section (26), an outer peripheral surface of the sealing member is capable of contacting an inner wall of the shell (25) at the tapered section (26) to form a sealing position to prevent fluid from flowing out of the oil filter (20); and
that the sealing member can be actuated by an external force to move such that the outer peripheral surface of the sealing member is spaced apart from the inner wall, thereby opening a flow path (P) that allows fluid to flow out of the oil filter (20).

7. The oil filtering assembly according to claim 6, **characterized in that** the oil filter (20) further comprises a return spring (22), which is disposed on the sealing member to return the sealing member to the sealing position when the sealing member is not actuated by an external force.

8. The oil filtering assembly according to claim 6 or 7, **characterized in that** the sealing member comprises a sealing head (23) and a sealing ring (24) sleeved on an outer surface of the sealing head (23), the sealing ring (24) being configured to contact or disengage from the inner wall of the shell (25).

9. A cooking appliance, comprising an inner pot (2) for containing food to be cooked and an oil collecting tray (3) removably placed under the inner pot (2), **characterized in that** the cooking appliance further comprises the oil filtering assembly according to any one of claims 1 to 8.

10. The cooking appliance according to claim 9, **characterized in that** the first oil filtering screen (11) is hat-shaped with a central portion arched relative to a periphery and comprises an arched portion (112) and a peripheral portion (113), and when the filtering member (10) is placed above the oil filter (20), the peripheral portion (113) of the first oil filtering screen (11) abuts against a bottom of the inner pot (2), and the handle (12) hangs on an upper edge (27) of the inner pot (2).

11. The cooking appliance according to claim 9 or 10, **characterized in that** the oil filter (20) is disposed through the bottom of the inner pot (2), and at least a portion of the shell (25) of the oil filter (20) and the sealing member disposed within the shell (25) is located outside the inner pot (2).

12. The cooking appliance according to claim 11, **characterized in that** the oil collecting tray (3) is provided with a protrusion (31) configured to contact a lower end of the sealing member, so that when the oil collecting tray (3) is placed under the inner pot (2), the protrusion (31) contacts the sealing member and pushes the sealing member to move, thereby opening the flow path (P) that allows fluid to flow out of the oil filter (20).

13. The cooking appliance according to claim 12, **characterized in that** the oil collecting tray (3) is provided with a button (32) attached to the protrusion (31), wherein the button (32) is capable of being pressed from the outside to push the protrusion (31) to move, and the protrusion (31) in turn pushes the sealing member to move.

14. The cooking appliance according to claim 13, **characterized in that** the button (32) is disposed on a front panel of the oil collecting tray (3).
